# NEUE EUROPÄISCHE PATENTSCHRIFT

(11) **EP 3 221 538 B2**
(45) Veröffentlichungstag und Bekanntmachung des Hinweises auf die Entscheidung über den Einspruch: **20.07.2022**
(45) Hinweis auf die Patenterteilung: 07.03.2018
(21) Anmeldenummer: 15781288.4
(22) Anmeldetag: 28.09.2015
(51) Int. Cl.: E05F 1/10

(54) **STELLANTRIEB FÜR BEWEGBARE MÖBELTEILE**
ACTUATOR FOR MOVABLE FURNITURE PARTS
MÉCANISME DE COMMANDE POUR PARTIES MOBILES DE MEUBLE

(30) Priorität: 21.11.2014 AT 8422014
(43) Veröffentlichungstag der Anmeldung: 27.09.2017
(73) Patentinhaber: Julius Blum GmbH, 6973 Höchst (AT)
(72) Erfinder: LUBETZ, Simon, 6973 Hoechst (AT); SCHMID, Malte, 88131 Bodolz (DE)
(74) Vertreter: Torggler & Hofmann Patentanwälte - Innsbruck
(86) Internationale Anmeldenummer: PCT/AT2015/000124
(87) Internationale Veröffentlichungsnummer: WO 2016/077851

(56) Entgegenhaltungen:
- EP-A1- 1 296 011
- EP-A1- 1 625 270
- EP-A1- 1 990 494
- EP-A1- 1 999 328
- EP-A1- 2 003 276
- EP-A2- 1 148 200
- WO-A1-03/097973
- WO-A1-2004/104339
- WO-A1-2007/112800
- DE-A1-102004 019 785
- US-A- 2 824 466
- "SALICE 100 200", SALICE, 1990,
- "SALICE Technology in motion", SALICE, 1991,

## Beschreibung

Die vorliegende Erfindung bezieht sich auf einen Stellantrieb zum Bewegen eines bewegbaren Möbelteiles, umfassend:
- zumindest einen um eine Drehachse schwenkbar gelagerten Stellarm zum Bewegen des bewegbaren Möbelteiles,
- eine Federvorrichtung zur Kraftbeaufschlagung des Stellarmes,
- einen Übertragungsmechanismus zum Übertragen einer Kraft von der Federvorrichtung auf den Stellarm, wobei der Übertragungsmechanismus ein mit dem Stellarm bewegungsgekoppeltes Stellteil, eine am Stellteil angeordnete Stellkontur und ein von der Federvorrichtung belastetes Druckstück aufweist, wobei das Druckstück bei einer Bewegung des Stellarmes entlang der Stellkontur verfahrbar ist.

Im Weiteren betrifft die Erfindung eine Anordnung mit einem bewegbaren Möbelteil und mit einem Stellantrieb der zu beschreibenden Art.

In der WO 2006/005086 A1 der Anmelderin ist ein Stellantrieb zum Bewegen von Möbelklappen beschrieben, wobei die Kraft einer Federvorrichtung über einen Übertragungsmechanismus auf einen schwenkbar gelagerten Stellarm übertragbar ist. Der Übertragungsmechanismus umfasst dabei einen von der Federvorrichtung belasteten Zwischenhebel, der über eine Druckrolle und eine Stellkontur den Stellarm verschwenkt. Zur Einstellung der Federkraft ist eine Befestigungsstelle der Federvorrichtung am Zwischenhebel entlang einer Gewindespindel verstellbar gelagert. Hierfür ist ein entsprechend langer Verstellweg vorzusehen, der den Bauraum des Stellantriebes erhöht.

Aufgabe der vorliegenden Erfindung ist es, einen Stellantrieb der eingangs erwähnten Gattung mit einer kompakteren Bauweise anzugeben.

Dies wird erfindungsgemäß durch die Merkmale des Patentanspruchs 1 gelöst. Weitere vorteilhafte Ausgestaltungen der Erfindung sind in den abhängigen Unteransprüchen angegeben.

Gemäß der Erfindung ist eine Einstellvorrichtung vorgesehen, durch welche die Lage der Stellkontur relativ zum Stellteil einstellbar ist.

Mit anderen Worten weist der Stellantrieb ein bewegliches Stellteil auf, welches sich bei einer Bewegung des Stellarmes mit diesem mitbewegt. An diesem Stellteil ist eine Stellkontur angeordnet oder ausgebildet, wobei die Stellkontur durch eine manuelle Betätigung der Einstellvorrichtung relativ zum Stellteil, vorzugsweise relativ zu einer Drehachse des Stellteiles, einstellbar ist.

Der Vorteil dieser Konstruktion liegt zunächst in einem reduzierten Verstellweg, da durch die Einstellung der Stellkontur relativ zum Stellteil direkt auf die Federvorspannung und/oder auf den Drehmomentverlauf des Stellarmes Einfluss genommen wird. Auf diese Weise kann beispielsweise auf die Anordnung von relativ langen Gewindespindeln, durch die eine Befestigungsstelle der Federvorrichtung an einem Zwischenhebel relativ zur Drehachse dieses Zwischenhebels verstellbar ist, verzichtet werden. Der erforderliche Einstellweg kann daher - bei gleich abzudeckendem Kraftbereich im Vergleich zum Stand der Technik - entsprechend verringert werden, wobei besonders kompakte Bauformen des Stellantriebes möglich sind.

Durch eine durch die Einstellvorrichtung herbeigeführte - vorzugsweise stufenlose - Änderung der Lage der Stellkontur relativ zum Stellteil ist auch das auf den Stellarm und damit das auf das bewegbare Möbelteil ausgeübte Drehmoment und/oder der Drehmomentverlauf veränderbar einstellbar. Somit ist der Stellantrieb für verschiedene Gewichte, Größen und Formen von Möbelklappen, insbesondere auch für Faltklappen mit gelenkig miteinander verbundenen Teilklappen, gleichermaßen verwendbar.

Gemäß einem Ausführungsbeispiel kann vorgesehen sein, dass die Federvorrichtung austauschbar am Stellantrieb gelagert ist, sodass Federvorrichtungen mit unterschiedlichen Leistungsfaktoren wahlweise an ein und demselben Stellantrieb zu befestigen sind. Eine Person kann also im Werk oder auch vor Ort aus einem Set von Federvorrichtungen jenen Leistungsfaktor auswählen, der mit dem jeweiligen Gewicht der Möbelklappe und mit der Höhe des Möbelkorpus korrespondiert. Nach erfolgter Auswahl der Federvorrichtung kann durch Betätigung der Einstellvorrichtung eine präzise Krafteinstellung bzw. Feinjustierung durchgeführt werden, die exakt auf das jeweilige Gewicht der Klappe abgestimmt ist.

Gemäß einem Ausführungsbeispiel wandelt die Einstellvorrichtung eine durch eine Person herbeigeführte Drehbewegung eines Verstellrades in eine Längsbewegung der Stellkontur um. Die Einstellvorrichtung ist zweckmäßigerweise selbsthemmend ausgebildet, sodass also die vorgenommene Einstellung ohne weiteres Zutun in jeder einmal eingestellten Position verbleibt. Die Einstellvorrichtung kann beispielsweise ein Schneckengetriebe, eine mit einer Verzahnung zusammenwirkende spiralförmige Kulisse, ein mit einer Zahnstange zusammenwirkendes Zahnrad oder auch einen selbsthemmend ausgebildeten Exzenter aufweisen.

Weitere Einzelheiten und Vorteile der vorliegenden Erfindung ergeben sich anhand der in den Figuren gezeigten Ausführungsbeispiele. Dabei zeigt bzw. zeigen:
- Fig. 1a, 1b: ein Möbel mit einem Möbelkorpus und einem relativ dazu bewegbaren Möbelteil in einer perspektivischen Darstellung sowie der am Möbelkorpus befestigte Stellantrieb in einer Seitenansicht,
- Fig. 2: ein Ausführungsbeispiel eines Stellantriebes in einer perspektivischen Ansicht,
- Fig. 3a, 3b: das Stellteil mit der daran angeordneten Stellkontur in zwei verschiedenen Ansichten,
- Fig. 4: den Stellantrieb in einer Explosionsdarstellung,
- Fig. 5a-5c: verschiedene Ansichten eines Stellteiles mit der Stellkontur gemäß einer weiteren Ausführungsform,
- Fig. 6: die Ausführungsform gemäß den Fig. 5a-5c in einer Explosionsdarstellung,
- Fig. 7: ein Diagramm der Öffnungskraftverläufe mit unterschiedlich eingestellten Lagen der Stellkontur aufgetragen über den Öffnungswinkel der oberen Teilklappe gemäß Fig. 1a, 1b

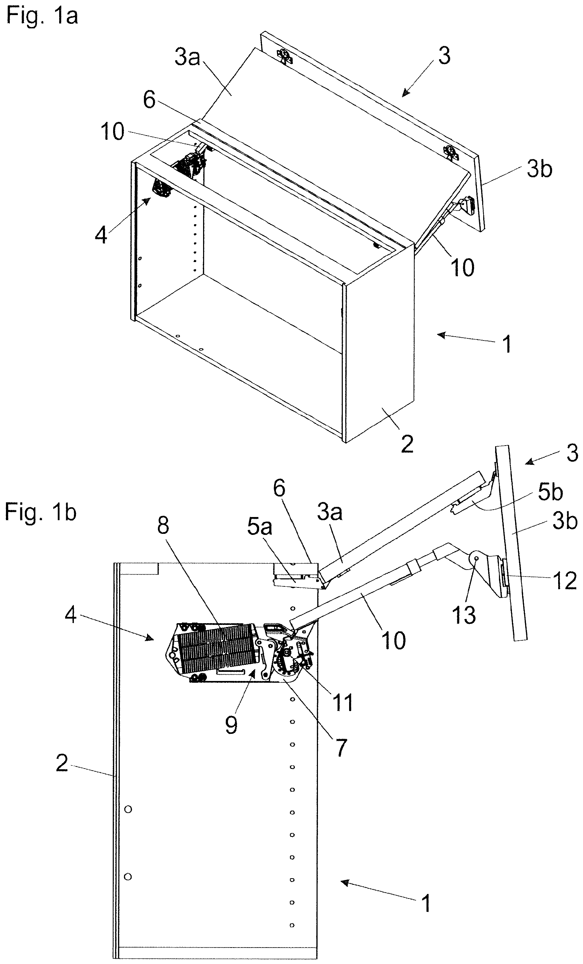

Fig. 1a zeigt ein Möbel 1 mit einem Möbelkorpus 2 und einem bewegbaren Möbelteil 3 in einer perspektivischen Ansicht. Das bewegbare Möbelteil 3 ist in der gezeigten Figur als zweiteilige Hochfaltklappe mit zwei Teilklappen 3a und 3b ausgebildet, wobei die obere Teilklappe 3a über erste Scharniere 5a (Fig. 1b) schwenkbar mit dem Schrankdeckel 6 und die untere Teilklappe 3b über zweite Scharniere 5b gelenkig mit der oberen Teilklappe 3a verbunden ist. Zum Bewegen des bewegbaren Möbelteiles 3 ist zumindest ein Stellantrieb 4 am Möbelkorpus 2 montiert, wobei das bewegbare Möbelteil 3 zwischen einer Schließstellung (in der die beiden Teilklappen 3a, 3b in einer gemeinsamen vertikalen Ebene liegen und dabei den Möbelkorpus 2 verschließen) und einer Öffnungsstellung (in der die Teilklappen 3a, 3b eine wie in Fig. 1b gezeigte winkelige Stellung relativ zueinander einnehmen) bewegbar gelagert ist.

Fig. 1b zeigt den am Möbelkorpus 2 befestigten Stellantrieb 4 in einer Seitenansicht, wobei zur Bewegungsunterstützung des bewegbaren Möbelteiles 3 in einem Gehäuse 7 eine Federvorrichtung 8 angeordnet ist. In der gezeigten Figur ist die Federvorrichtung 8 als Federpaket mit mehreren parallel geschalteten Schraubenfedern, vorzugsweise Druckfedern, ausgebildet. Die Kraft der Federvorrichtung 8 ist über einen Übertragungsmechanismus 9 auf einen Stellarm 10 übertragbar, welcher einerseits um eine Drehachse 11 schwenkbar am Gehäuse 7 gelagert und andererseits über eine Gelenkachse 13 schwenkbar mit einem an der unteren Teilklappe 3b zu befestigenden Beschlagteil 12 verbunden ist. Der Stellantrieb 4 ist aber gleichermaßen auch für einteilige Möbelklappen, insbesondere für so genannte Hochschwenkklappen (wobei die Klappe über den Möbelkorpus 2 hinweg verschwenkt wird), Hochklappen (wobei die Klappe um eine horizontale Achse schwenkbar am Möbelkorpus 2 gelagert ist) sowie Hochliftklappen (wobei die Klappe vertikal angehoben wird) einsetzbar.

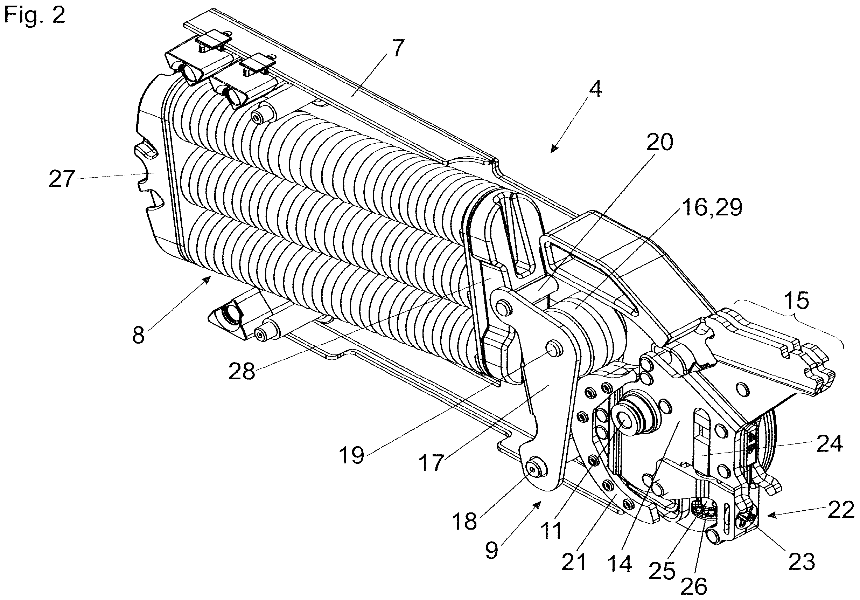

Fig. 2 zeigt ein Ausführungsbeispiel eines Stellantriebes 4 mit dem Übertragungsmechanismus 9 in einer perspektivischen Ansicht. Zur Kraftbeaufschlagung des Stellarmes 10 (Fig. 1b) ist eine Federvorrichtung 8 vorgesehen, welche sich mit einem ersten Endbereich 27 am Gehäuse 7 abstützt. Der zweite Endbereich 28 der Federvorrichtung 8 drückt auf einen Bolzen 20 eines Hebels 17, der um eine Gelenkachse 18 schwenkbar am Gehäuse 7 gelagert ist.

Zum werkzeuglosen Austausch bzw. Ersatz der Federvorrichtung 8 mit einem unterschiedlichen Leistungsfaktor wird der zweite Endbereich 28 der Federvorrichtung 8 durch manuelle Druckausübung entgegen der Federkraft in Richtung zum ersten Endbereich 27 gedrückt, sodass die Federvorrichtung 8 komprimiert und die lose Verbindung zwischen dem zweiten Endbereich 28 und dem Bolzen 20 lösbar ist. Der einarmige Hebel 17 weist ein Drehlager 19 auf, an dem ein Druckstück 16 in Form einer drehbar gelagerten Druckrolle 29 gelagert ist. Am Gehäuse 7 ist ein beweglicher, vorzugsweise um eine Drehachse 11 schwenkbarer, Stellteil 14 angeordnet, wobei das Stellteil 14 mit dem Stellarm 10 über eine Kupplungsvorrichtung 15 bewegungsgekoppelt verbindbar ist. Alternativ ist es auch möglich, das Stellteil 14 zusammen mit dem Stellarm 10 einstückig auszubilden. Am Stellteil 14 ist eine Stellkontur 21 angeordnet oder ausgebildet, deren Lage durch eine Einstellvorrichtung 22 relativ zum Stellteil 14, vorzugsweise relativ zu einer Drehachse 11 des Stellteiles 14, einstellbar ist. Das Druckstück 16 in Form der Druckrolle 29 wird durch die Kraft der Federvorrichtung 8 gegen die Stellkontur 21 gedrückt, wobei das Druckstück 16 bei einer Bewegung des Stellarmes 10 bzw. des damit bewegungsgekoppelten Stellteiles 14 entlang der Stellkontur 21 abrollbar ist.

Die Einstellvorrichtung 22 kann ein Verstellrad 23 umfassen, wobei durch Drehung des Verstellrades 23 mittels Betätigungswerkzeug die Lage der Stellkontur 21 relativ zum drehbar gelagerten Stellteil 14 einstellbar ist. Vorzugsweise ist eine stufenlose Einstellung der Lage der Stellkontur 21 vorgesehen. Es ist aber auch möglich, die Stellkontur 21 an zwei oder mehreren vorgegebenen und voneinander abweichenden Positionen relativ zum Stellteil 14 festzulegen. Im gezeigten Ausführungsbeispiel wirkt das Verstellrad 23 mit einer Stirnverzahnung 26 eines Gewindeabschnittes 25 zusammen, entlang dem ein Lagerteil 24 verstellbar gelagert ist. Durch eine Verstellung des Lagerteiles 24 ist auch die Lage der damit bewegungsgekoppelten Stellkontur 21 einstellbar.

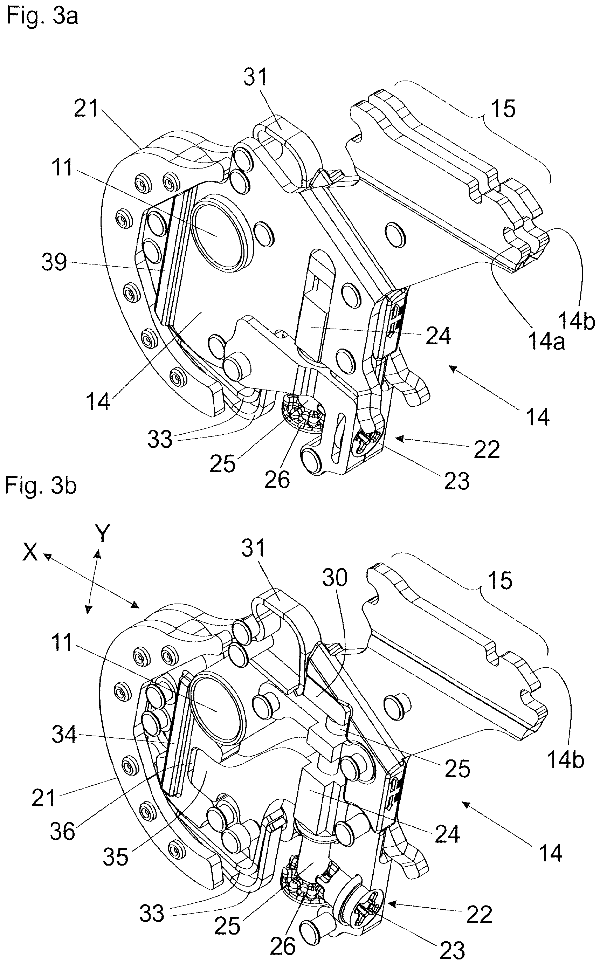

Fig. 3a zeigt den um die Drehachse 11 schwenkbar gelagerten Stellteil 14 mit der daran angeordneten Stellkontur 21. Das Stellteil 14 weist im gezeigten Ausführungsbeispiel zwei voneinander parallel beabstandete Bauteile 14a und 14b auf. Durch eine durch eine Person herbeigeführte Verdrehung des Verstellrades 23 wird der Lagerteil 24 entlang des Gewindeabschnittes 25 bewegt, wodurch auch die Lage der Stellkontur 21 relativ zum Stellteil 14 einstellbar ist.

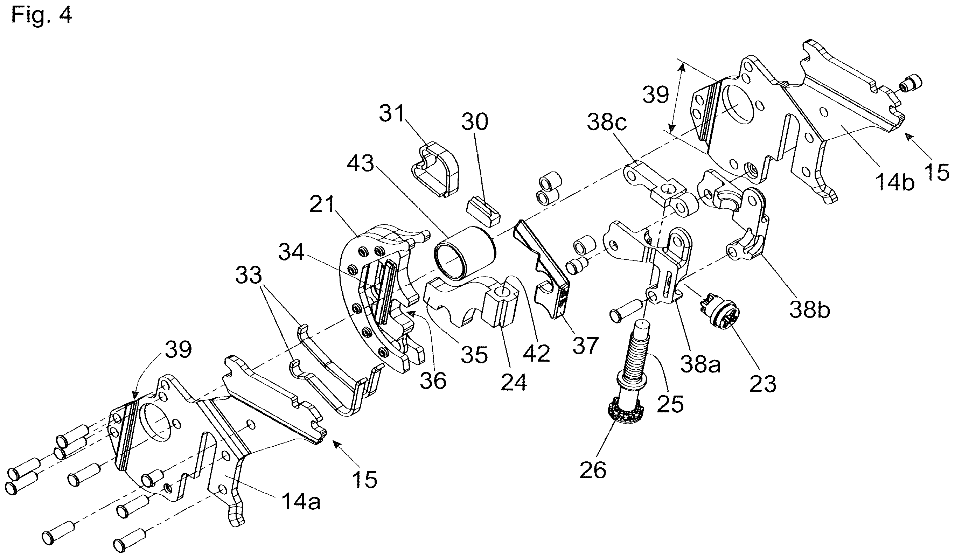

Fig. 3b zeigt das Stellteil 14 gemäß Fig. 3a ohne das vordere Bauteil 14a, sodass das Zusammenwirken des Verstellrades 23 mit der Stirnverzahnung 26 des Gewindeabschnittes 25 sowie das Zusammenwirken des Lagerteiles 24 mit der Stellkontur 21 ersichtlich ist. Mit der Stellkontur 21 ist ein Führungselement 34 mit einer Ausnehmung 36 verbunden, wobei ein Vorsprung 35 des verstellbaren Lagerteiles 24 in die Ausnehmung 36 des Führungselementes 34 eingreift. Auf diese Weise ist die Lage der Stellkontur 21 relativ zur Drehachse 11 des Stellteiles 14 in Richtung des eingezeichneten Pfeils Y und/oder in Richtung des Pfeils X einstellbar, sodass also der auf den Stellarm 10 ausgeübte Drehmomentverlauf und/oder die Vorspannung der Federvorrichtung 8 veränderbar einstellbar ist. Zur spielfreien Lagerung des Gewindeabschnitts 25 ist ein von einem Federelement 31 belastetes Keilelement 30 vorgesehen, das eine Bewegung des Gewindeabschnitts 25 in axialer Richtung hemmt. Zur spielfreien Lagerung der Stellkontur 21 ist zumindest ein weiteres Federelement 33 vorgesehen, welches das Führungselement 34 der Stellkontur gegen eine Führung 39 (Fig. 4) des Stellteiles 14 drückt.

Die Stellkontur 21 bildet eine relativ zur Drehachse 11 des Stellteiles 14 exzentrische, das Bewegungsverhalten des bewegbaren Möbelteiles 3 kräftemäßig beeinflussende Steuerkurve aus. Die Stellkontur 21 ist mit dem Stellarm 10 bewegungsgekoppelt, wobei sich bei einer Schwenkbewegung des Stellarmes 10 auch die Stellkontur 21 mitbewegt. Die Stellkontur 21 bildet einen unterschiedlich radialen Abstand zur Drehachse 11 des Stellteiles 14 aus, sodass auf den Stellarm 10 gegen Ende der Schließbewegung ein Drehmoment in Schließrichtung ausgeübt wird. Bei der Öffnungsbewegung des Stellarmes 10 gelangt das Druckstück 16 auf einen Scheitelpunkt (das ist jener Bereich der Stellkontur 21 mit dem größten Radialabstand zur Drehachse 11), sodass die Federvorrichtung 8 - nach dem Durchlauf dieser Totpunktlage - auf den Stellarm 10 ein Drehmoment in Öffnungsrichtung ausübt. Das Drehmoment in Öffnungsrichtung kann so eingestellt werden, dass das bewegbare Möbelteil 3 in jeder Offenstellung selbsttätig stehen bleibt. Zur Dämpfung der Schließ- und/oder Öffnungsbewegung des Stellarmes 10 kann auch ein (hier nicht gezeigter) Dämpfer, insbesondere ein Fluiddämpfer, eingesetzt werden.

Fig. 4 zeigt das in den Fig. 3a und Fig. 3b gezeigte Stellteil 14 zusammen mit der Stellkontur 21 in einer Explosionsdarstellung. Die Bauteile 14a und 14b des Stellteiles 14 weisen jeweils eine Führung 39 auf, entlang der - durch Betätigung der Einstellvorrichtung 22 - ein korrespondierendes Führungselement 34 der Stellkontur 21 verschiebbar gelagert ist. Im gezeigten Ausführungsbeispiel weisen die Führungen 39 einen linearen Verlauf auf, sodass also die Stellkontur 21 in Richtung Y (Fig. 3b), also quer zur Wirkrichtung X der Federvorrichtung 8, verstellbar ist. Durch die jeweilige Form und Größe der Führung 39 (beispielsweise durch einen bogenförmigen Verlauf der Führung 39) ist die Stellkontur 21 in Richtung X und/oder in Richtung Y (Fig. 3b) verstellbar, sodass die Vorspannung der Federvorrichtung 8 und/oder der auf den Stellarm 10 wirkende Drehmomentverlauf veränderbar einstellbar ist. Die Einstellvorrichtung 22 mit dem Verstellrad 23 sowie der Gewindeabschnitt 25 mit der Stirnverzahnung 26 lagern zwischen ersten und zweiten Halteteilen 38a und 38b, wobei der Gewindeabschnitt 25 in Eingriff mit einem Innengewinde 42 des Lagerteiles 24 steht und wobei der freie Endabschnitt des Gewindeabschnitts 25 in eine Öffnung eines dritten Halteteiles 38c hineinragt. Entlang des Gewindeabschnitts 25 ist der Lagerteil 24 verstellbar gelagert, der mit einem Vorsprung 35 in eine Öffnung 36 der Stellkontur 21 eingreift. Ein durch ein Federelement 31 beaufschlagtes Keilelement 30 wirkt einerseits mit einem Gegenlager 37, andererseits mit einer Stirnfläche des Gewindeabschnitts 25 zusammen, wodurch der Gewindeabschnitt 25 an einer unerwünschten Verschiebung in axialer Richtung gehemmt ist. Über weitere Federelemente 33 in Form von Kunststoffspangen wird das Führungselement 34 der Stellkontur 21 gegen die Führung 39 der Bauteile 14a, 14b gedrückt, sodass die Stellkontur 21 am Stellteil 14 spielfrei anliegt. Über eine Hülse 43 ist das Stellteil 14 zusammen mit der Stellkontur 21 am Gehäuse 7 des Stellantriebes 4 befestigt.

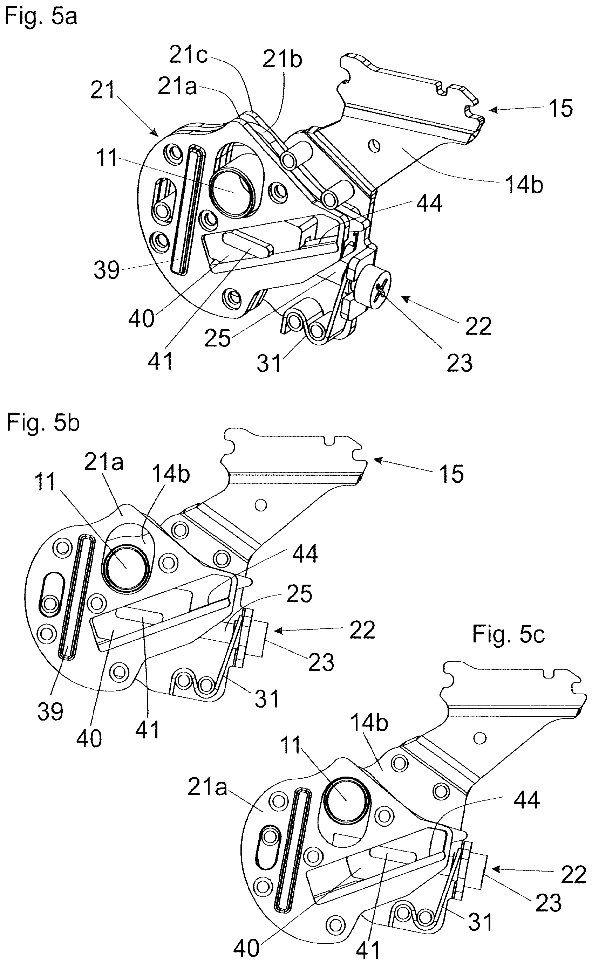

Fig. 5a-5c zeigen das Stellteil 14 (welches durch die Bauteile 14b und dem hier nicht ersichtlichen Teil 14a gebildet ist) mit der Stellkontur 21 gemäß einer weiteren Ausführungsform. Die Stellkontur 21 wird hierbei von der Umfangsfläche dreier Scheiben 21a, 21b, 21c gebildet, welche parallel zueinander angeordnet sind. Der durch das Verstellrad 23 verdrehbare Gewindeabschnitt 25 steht dabei mit einem verstellbaren Schieber 40 in Eingriff. Am Schieber 40 sind beidseitig Rippen 41 ausgebildet, die jeweils in schrägen Schlitzen 44 der beiden äußeren Scheiben 21a, 21c eingreifen. Durch Verdrehen des Verstellrades 23 mittels Betätigungswerkzeug sind alle drei Scheiben 21a, 21b, 21c gemeinsam im Paket über die Rippen 41 relativ zur Drehachse 11 anhebbar und absenkbar. Fig. 5b zeigt die angehobene Stellung der die Stellkontur 21 bildenden Scheiben 21a, 21b, 21c relativ zur Drehachse 11 des Bauteils 14b. Fig. 5c zeigt hingegen die abgesenkte Lage der Scheiben 21a, 21b, 21c relativ zur Drehachse 11 des Stellteiles 14. Durch ein als Blattfeder ausgebildetes Federelement 31 ist der Gewindeabschnitt 25 in axialer Richtung spielfrei festgelegt.

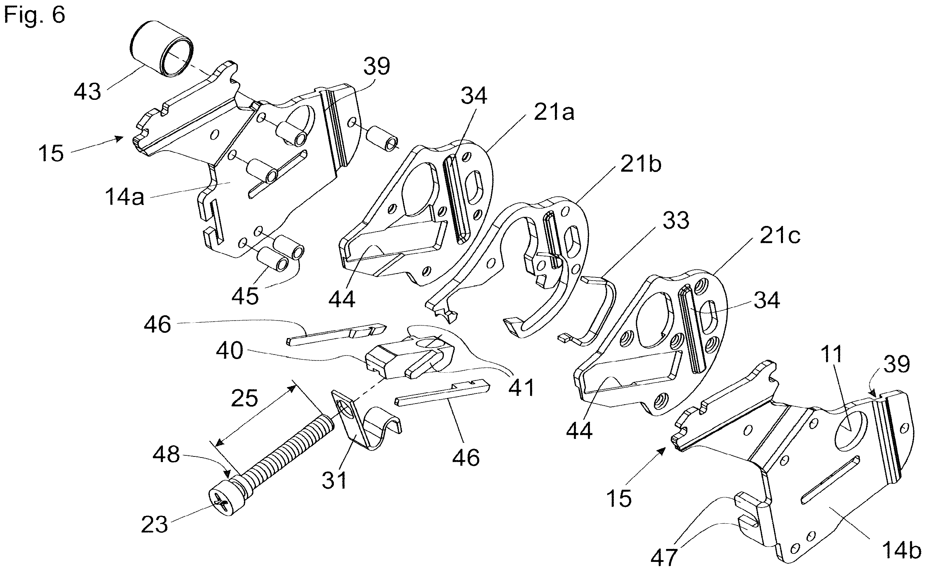

Fig. 6 zeigt die Ausführungsform gemäß den Fig. 5a-5c in einer Explosionsdarstellung. Das Stellteil 14 umfasst die Bauteile 14a und 14b, die durch mehrere Distanzhalter 45 voneinander parallel beabstandet sind. Die Stellkontur 21 wird durch eine Umfangsfläche der Scheiben 21a, 21b, 21c gebildet. Die Bauteile 14a, 14b weisen jeweils eine Führung 39 zur verschiebbaren Führung eines Führungselementes 34 der beiden äußeren Scheiben 21a und 21c auf. Die mittlere Scheibe 21b ist mit den äußeren Scheiben 21a, 21c bewegungsgekoppelt verbunden. Der Gewindeabschnitt 25 steht mit einem Schieber 40 in Gewindeeingriff, wobei durch Verdrehen des Verstellrades 23 der Schieber 40 entlang des Gewindeabschnittes 25 verstellbar ist und wobei die Scheiben 21a, 21b, 21c über beidseitig am Schieber 40 angeordnete Rippen 41, welche jeweils in die schrägen Schlitze 44 der Scheiben 21a und 21c eingreifen, verstellbar gelagert ist. Zur reibungsarmen Führung der Rippen 41 entlang der Schlitze 44 können Kunststoffprofile 46 vorgesehen werden. Durch das als Blattfeder ausgebildete Federelement 31 ist der Gewindeabschnitt 25 bzw. der Schieber 40 an den Schlitzen 44 spielfrei festgelegt, das andere Federelement 33 drückt die Führungselemente 34 der Scheiben 21a, 21c spielfrei gegen die Führungen 39 des Teile 14a, 14b. Zur Lagerung des Verstellrades 23 am Bauteil 14b sind zwei Lagerteile 47 vorgesehen, die jeweils in eine zwischen dem Verstellrad 23 und dem Gewindeabschnitt 25 gebildete Ringnut 48 eingreifen, sodass der Gewindeabschnitt 25 am Bauteil 14b drehbar, jedoch axial unverschiebbar gelagert ist. Gemäß dem gezeigten Ausführungsbeispiel ist das Verstellrad 23 zusammen mit dem Gewindeabschnitt 25 einstückig ausgebildet. Falls zweckmäßig, können zwischen dem Verstellrad 23 und dem Gewindeabschnitt 25 auch zusätzliche Getriebeelemente angeordnet werden. Der Gewindeabschnitt 25 weist vorzugsweise ein Gewinde mit geringer Steigung auf, damit die Selbsthemmung des Schiebers 40 am Gewindeabschnitt 25 verbessert werden kann.

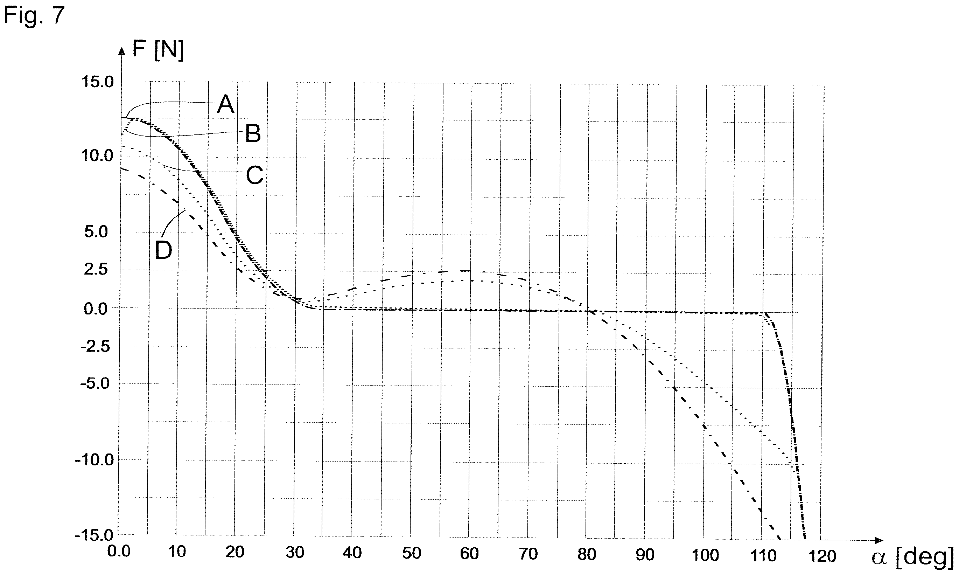

Fig. 7 zeigt einen möglichen Verlauf der Öffnungskraft, Kraft F in Newton [N], der oberen Teilklappe 3a (Fig. 1) aufgetragen über dem Öffnungswinkel, in Grad [deg], bei unterschiedlichen Einstellungen der Stellkontur 21 relativ zum Stellteil 14. Die Kurve A stellt den (theoretischen) Idealverlauf dar, wobei beim Öffnen der Teilklappe 3a ausgehend von 0° Öffnungswinkel die erforderliche Kraft zum Öffnen unmittelbar absinkt und anschließend bei etwa 35° Öffnungswinkel gegen Null geht. Die Kurve B stellt die Maximaleinstellung der Einstellvorrichtung 22 dar, wobei also das auf den Stellarm 10 ausgeübte Drehmoment am höchsten ist (also für schwere Möbelklappen), wobei die zum Öffnen erforderliche Kraft zunächst über eine kleinen Öffnungswinkelbereich ansteigt und anschließend bei etwa 35° Öffnungswinkel ebenfalls gegen Null geht. Die Kurve C zeigt die mittlere Einstellung (also für mittelschwere Möbelklappen) mit einem relativ zur Kurve B reduzierten Drehmoment. Die Kurve D zeigt schließlich die Minimaleinstellung (also für leichte Möbelklappen), wobei das in der Schließstellung ausgeübte Drehmoment auf den Stellarm 10 im Vergleich zu den Kurven B und C am geringsten ist. Auch wenn die Zuhaltekräfte der Kurven B, C, D bei 0° Öffnungswinkel der oberen Teilklappe 3a geringfügig voneinander abweichen, so wird anhand des gezeigten Diagramms deutlich, dass unabhängig von der eingestellten Lage der Stellkontur 21 relativ zum Stellteil 14 der Öffnungskraftverlauf der Kurven B, C, D annähernd gleich ist.

Unter "Lageänderung" der Stellkontur 21 sei auch die Maßnahme verstanden, dass nur ein Teilabschnitt der Stellkontur 21 durch die Einstellvorrichtung 22 verstellbar ist, womit sich insgesamt auch die Lage der Stellkontur 21 relativ zum Stellteil 14 ändert. Dieser Teilabschnitt der Stellkontur 21 kann beispielsweise an einem Träger beweglich gelagert und durch die Einstellvorrichtung 22 relativ zu diesem Träger schwenkbar und/oder linear verstellbar gelagert sein.

## Patentansprüche

1. Stellantrieb (4) zum Bewegen eines bewegbaren Möbelteiles (3), umfassend:
- zumindest einen um eine Drehachse (11) schwenkbar gelagerten Stellarm (10) zum Bewegen des bewegbaren Möbelteiles (3),
- eine Federvorrichtung (8) zur Kraftbeaufschlagung des Stellarmes (10),
- einen Übertragungsmechanismus (9) zum Übertragen einer Kraft von der Federvorrichtung (8) auf den Stellarm (10), wobei der Übertragungsmechanismus (9) ein mit dem Stellarm (10) bewegungsgekoppeltes Stellteil (14), eine am Stellteil (14) angeordnete Stellkontur (21) und ein von der Federvorrichtung (8) belastetes Druckstück (16) aufweist, wobei das Druckstück (16) bei einer Bewegung des Stellarmes (10) entlang der Stellkontur (21) verfahrbar ist, wobei das Druckstück (16) als drehbar gelagerte Druckrolle (29) ausgebildet ist,
**dadurch gekennzeichnet, dass** eine Einstellvorrichtung (22) vorgesehen ist, durch welche die Lage der Stellkontur (21) relativ zum Stellteil (14) einstellbar ist.

2. Stellantrieb nach Anspruch 1, **dadurch gekennzeichnet, dass** die Einstellvorrichtung (22) selbsthemmend ausgebildet ist.

3. Stellantrieb nach Anspruch 1 oder 2, **dadurch gekennzeichnet, dass** die Lage der Stellkontur (21) durch die Einstellvorrichtung (22) stufenlos einstellbar ist.

4. Stellantrieb nach einem der Ansprüche 1 bis 3, **dadurch gekennzeichnet, dass** die Einstellvorrichtung (22) eine durch eine Person herbeigeführte Drehbewegung eines Verstellrades (23) in eine Längsbewegung der Stellkontur (21) umwandelt.

5. Stellantrieb nach Anspruch 4, **dadurch gekennzeichnet, dass** durch Verdrehen des Verstellrades (23) ein Lagerteil (24) antreibbar ist, welches entlang eines Gewindeabschnittes (25) verstellbar gelagert ist, wobei die Stellkontur (21) mit dem Lagerteil (24) bewegungsgekoppelt verbunden ist.

6. Stellantrieb nach Anspruch 5, **dadurch gekennzeichnet, dass** der Gewindeabschnitt (25) in axialer Richtung durch ein durch ein Federelement (31) belastetes Keilelement (30) spielfrei festgelegt ist.

7. Stellantrieb nach einem der Ansprüche 1 bis 6, **dadurch gekennzeichnet, dass** das Stellteil (14) eine Führung (39) aufweist, entlang der die Stellkontur (21) verstellbar gelagert ist, wobei ein mit der Stellkontur (21) verbundenes Führungselement (34) entlang dieser Führung (39) verstellbar gelagert ist.

8. Stellantrieb nach Anspruch 7, **dadurch gekennzeichnet, dass** zumindest ein weiteres Federelement (33) vorgesehen ist, welches das Führungselement (34) der Stellkontur (21) gegen die Führung (39) des Stellteiles (14) drückt.

9. Stellantrieb nach einem der Ansprüche 1 bis 8, **dadurch gekennzeichnet, dass** durch eine Betätigung der Einstellvorrichtung (22) die Vorspannung der Federvorrichtung (8) und/oder der auf den Stellarm (10) wirkende Drehmomentverlauf veränderbar einstellbar ist.

10. Stellantrieb nach einem der Ansprüche 1 bis 9, **dadurch gekennzeichnet, dass** die Federvorrichtung (8) zumindest eine, vorzugsweise als Druckfeder ausgebildete, Schraubenfeder umfasst.

11. Stellantrieb nach einem der Ansprüche 1 bis 10, **dadurch gekennzeichnet, dass** das Stellteil (14) zwei oder mehrere miteinander verbundene Bauteile (14a, 14b) aufweist.

12. Stellantrieb nach einem der Ansprüche 1 bis 11, **dadurch gekennzeichnet, dass** die Stellkontur (21) zwei oder mehrere miteinander verbundene Scheiben (21a, 21b, 21c) aufweist.

13. Anordnung mit einem bewegbaren Möbelteil (3) und mit einem Stellantrieb (4) nach einem der Ansprüche 1 bis 12 zum Bewegen des bewegbaren Möbelteiles (3).

## Claims

1. An actuating drive (4) for moving a movable furniture part (3), including:
- at least one actuating arm (10) pivotally mounted about a pivoting axis (11) for moving the movable furniture part (3),
- a spring device (8) for applying a force to the actuating arm (10),
- a transmission mechanism (9) for transmitting a force from the spring device (8) to the actuating arm (10), wherein the transmission mechanism (9) includes an actuating portion (14) movement-coupled to the actuating arm (10), a setting contour (21) arranged on the actuating portion (14) and a pressure portion (16) pressurized by the spring device (8), wherein the pressure portion (16) is configured to run along the setting contour (21) upon a movement of the actuating arm (10), wherein the pressure portion (16) is configured as a pivotally mounted pressure roller (29),
**characterized in that** an adjustment device (22) is provided by which a position of the setting contour (21) relative to the actuating portion (14) can be adjusted.

2. The actuating drive according to claim 1, **characterized in that** the adjustment device (22) has a self-locking configuration.

3. The actuating drive according to claim 1 or 2, **characterized in that** the position of the setting contour (21) can be continuously adjusted by the adjustment device (22).

4. The actuating drive according to one of the claims 1 to 3, **characterized in that** the adjustment device (22) converts a rotational movement of an adjustment wheel (23), effected by a person, into a longitudinal movement of the setting contour (21).

5. The actuating drive according to claim 4, **characterized in that** by rotating the adjustment wheel (23), a bearing portion (24) can be driven along a threaded section (25), wherein the setting contour (21) is movement-coupled to the bearing portion (24).

6. The actuating drive according to claim 5, **characterized in that** the threaded section (25) is secured in a play-free manner in axial direction by a wedge element (30) acted upon by a spring element (31).

7. The actuating drive according to one of the claims 1 to 6, **characterized in that** the actuating portion (14) has a guide (39) along which the setting contour (21) is adjustably arranged, wherein a guide element (34) connected to the setting contour (21) is adjustably arranged along said guide (39).

8. The actuating drive according to claim 7, **characterized in that** at least one further spring element (33) is provided for pressing the guide element (34) of the setting contour (21) against the guide (39) of the actuating portion (14).

9. The actuating drive according to one of the claims 1 to 8, **characterized in that** by an actuation of the adjustment device (22), the pre-stressing of the spring device (8) and/or the torque progression acting on the actuating arm (10) can be variably adjusted.

10. The actuating drive according to one of the claims 1 to 9, **characterized in that** the spring device (8) includes at least one helical spring, preferably in the form of a compression spring.

11. The actuating drive according to one of the claims 1 to 10, **characterized in that** the actuating portion (14) includes two or more components (14a, 14b) connected to one another.

12. The actuating drive according to one of the claims 1 to 11, **characterized in that** the setting contour (21) includes two or more discs (21a, 21b, 21c) connected to one another.

13. An arrangement with a movable furniture part (3) and with an actuating drive (4) according to one of the claims 1 to 12 for moving the movable furniture part (3).

## Revendications

1. Actionneur (4) pour déplacer une partie de meuble mobile (3), comprenant :
- au moins un bras de réglage (10) logé de façon pivotante autour d'un axe de rotation (11) pour déplacer la partie de meuble mobile (3),
- un dispositif à ressort (8) pour appliquer une force au bras de réglage (10),
- un mécanisme de transmission (9) pour transmettre une force du dispositif à ressort (8) au bras de réglage (10), dans lequel le mécanisme de transmission (9) présente une partie de réglage (14) couplée en mouvement au bras de réglage (10), un profil de réglage (21) disposé sur la partie de réglage (14) et un élément de pression (16) chargé par le dispositif à ressort (8), dans lequel l'élément de pression (16) est déplaçable dans un mouvement du bras de réglage (10) le long du profil de réglage (21), dans lequel l'élément de pression (16) est conçu comme un galet de pression (29) logé de façon mobile autour d'un axe,
**caractérisé en ce qu'**un dispositif de réglage (22) est prévu, par lequel la position du profil de réglage (21) peut être réglée par rapport à la partie de réglage (14).

2. Actionneur selon la revendication 1, **caractérisé en ce que** le dispositif de réglage (22) est conçu à blocage automatique.

3. Actionneur selon la revendication 1 ou 2, **caractérisé en ce que** la position du profil de réglage (21) peut être réglée progressivement par le dispositif de réglage (22).

4. Actionneur selon l'une des revendications 1 à 3, **caractérisé en ce que** le dispositif de réglage (22) transforme un mouvement de rotation, provoqué par une personne, d'une roue de réglage (23) en un mouvement longitudinal du profil de réglage (21).

5. Actionneur selon la revendication 4, **caractérisé en ce que** par torsion de la roue de réglage (23) une partie d'appui (24) peut être entraînée, laquelle est logée de façon déplaçable le long d'une section filetée (25), dans lequel le profil de réglage (21) est relié à la partie d'appui (24) en étant couplé en mouvement.

6. Actionneur selon la revendication 5, **caractérisé en ce que** la section filetée (25) est fixée sans jeu dans le sens axial par un élément en coin (30) chargé par un élément à ressort (31).

7. Actionneur selon l'une des revendications 1 à 6, **caractérisé en ce que** la partie de réglage (14) présente un guidage (39), le long duquel le profil de réglage (21) est logé de façon déplaçable, dans lequel un élément de guidage (34) relié au profil de réglage (21) est logé de façon déplaçable le long de ce guidage (39).

8. Actionneur selon la revendication 7, **caractérisé en ce qu'**au moins un autre élément à ressort (33) est prévu, lequel presse l'élément de guidage (34) du profil de réglage (21) contre le guidage (39) de la partie de réglage (14).

9. Actionneur selon l'une des revendications 1 à 8, **caractérisé en ce que** par un actionnement du dispositif de réglage (22), la précontrainte du dispositif à ressort (8) et / ou le tracé du couple de rotation agissant sur le bras de réglage (10) peut être réglé de façon modifiable.

10. Actionneur selon l'une des revendications 1 à 9, **caractérisé en ce que** le dispositif à ressort (8) comprend au moins un ressort cylindrique, conçu de préférence comme un ressort de pression.

11. Actionneur selon l'une des revendications 1 à 10, **caractérisé en ce que** la partie de réglage (14) présente deux ou plusieurs composants (14a, 14b) reliés ensemble.

12. Actionneur selon l'une des revendications 1 à 11, **caractérisé en ce que** le profil de réglage (21) présente deux ou plusieurs disques (21a, 21b, 21c) reliés ensemble.

13. Agencement avec une partie de meuble mobile (3) et avec un actionneur (4) selon l'une des revendications 1 à 12 pour déplacer la partie de meuble mobile (3).
